# EUROPEAN PATENT APPLICATION

(11) **EP 1 426 912 A2**
(43) Date of publication of application: **09.06.2004**
(21) Application number: 04075264.4
(22) Date of filing: 29.01.2004
(51) Int. Cl.: G09B 9/00, G09B 23/28

(54) **Medical wound treatment simulator**

(71) Applicant: SAAB AB, 581 88 Linköping (SE)
(72) Inventor:
(74) Representative: Norberg, Charlotte

(57) **Abstract**

The present invention relates to a medical treatment simulator. Said simulator comprises means for retrieving data from a soldier equipment regarding a simulated wound status of the soldier, said data including information regarding a wound area of the soldier body; a database arranged to store a set of wound types related to each possible wound area and processing means for selecting a wound type from the wound area information retrieved from the soldier equipment and from the set of wound types related to said wound area.

## Description

The present invention relates to a medical treatment simulator according to the preamble of claim 1.

One object of the invention is to provide means for training medical personnel in a battlefield.

This is achieved by the medical treatment simulator as described in claim 1. The medical treatment simulator enables the Medic to carry out wound evaluation and treatment selection based on a computer. All these functions are to be done in the field.

The MTS Equipment comprises one component, a Handheld Palmtop Computer. The Palmtop Computer communicates with the soldier equipment (PDD) via a communication port on top of the computer. For example, an IrDA or Bluetooth interface can be used.

The MTS equipment shall integrate the behaviour and influence of Medic handling during an exercise. Focus is placed on the logistic consequences for the exercising units more than skills training of the medic personnel. The MTS equipment is used to guide and register measures taken by the medic personnel. All steps are registered for later evaluation in After Action Review (AAR).

The initial wound evaluation is done in the soldier equipment PDD at the time of hit/injury. All hit results are located to a part of the body:
- Head
- Shoulder
- Stomach
- Left Arm
- Right Arm
- Left leg
- Right Leg

These are referred to as WoundAreas. The hit results/WoundAreas are stored in the PDD together with time information.

All possible wounds and treatments relevant to the situation are stored in a customer specific database in the MTS equipment.

Each step/measure taken by the Medical Operator is registered by the MTS equipment.

When the Medical personnel reach the wounded soldier the MTS equipment is used to feed status information from the soldier PDD into the MTS computer. For each of the seven WoundAreas, a number of injuries are stored in the database together with a probability of occurrence. By random selection using these probabilities, one of the injuries is selected, for example the WoundArea Right Arm becomes the injury Right Hand cut off by wrist.

In order to have a consistent treatment when soldiers are transported to field hospital etc., the injury is stored in the soldier PDD (not available for the soldier). When an additional identification is made no random selection is done provided that the PDD has not been hit again.

For each of the injuries, the database also contains all selectable examinations to be performed. These are presented to the Medical Operator on the MTS screen.

After the examination completion the Medical Operator selects a treatment from a list presented on a screen containing the selectable examinations. The Medical Operator takes the MTS equipment to the soldier and updates the status of the soldier and a Lifetime Counter.
- Fig 1: shows a Medical handling Use Case Diagram
- Fig 2: shows an example of an Identification View of a Medical Treatment Simulator
- Fig 3: shows an example of an Electronic Patient Card View of the Medical Treatment Simulator.
- Fig 4: shows an examination-subview of the Electronic Patient Card of fig 3.
- Fig 5: shows a treatment-subview of the Electronic Patient Card of fig 3.
- Fig 6: shows an example of an examination view of the Medical Treatment Simulator.
- Fig 7: shows an example of a treatment view of the Medical Treatment Simulator
- Fig 8: shows an example of a body location selection view of the Medical Treatment Simulator
- Fig 9: shows an example of a set-up view of the Medical Treatment Simulator
- Fig 10: shows an example of a supply view of the Medical Treatment Simulator

### Definitions, acronyms and abbreviations used in the description:

- ***AAR***: After Action Review
- ***AWES***: Attack Weapon Effect Simulator
- ***COTS***: Commercial Off The Shelf
- ***DBDD***: Database Design Description
- ***DFWES***: Direct Fire Weapons Effect Simulator
- ***EPC***: Electronic Patient Card
- ***EXCON***: Exercise Control
- ***HBM***: Human Body Model
- ***IDD***: Interface Design Description
- ***Injury***: Injury is an identifier used in the MTS based on Ammunition Category and Wound Area.
- ***Medical Operator***: The medic personnel using the MTS equipment for treatment of Players
- ***MTS***: Medical Treatment Simulator
- ***N*/*A***: Not applicable
- ***NDI***: Non Development Item
- ***PDA***: Personal Digital Assistant
- ***PDD***: Personal Detection Device
- ***Player***: All entities in the system that has a Player ID assigned.
- ***Player ID***: Unique identifier for a DFWES or AWES player participating in an exercise.
- ***WoundArea***: Wound Area indicates which area that has been hit in the PDD.

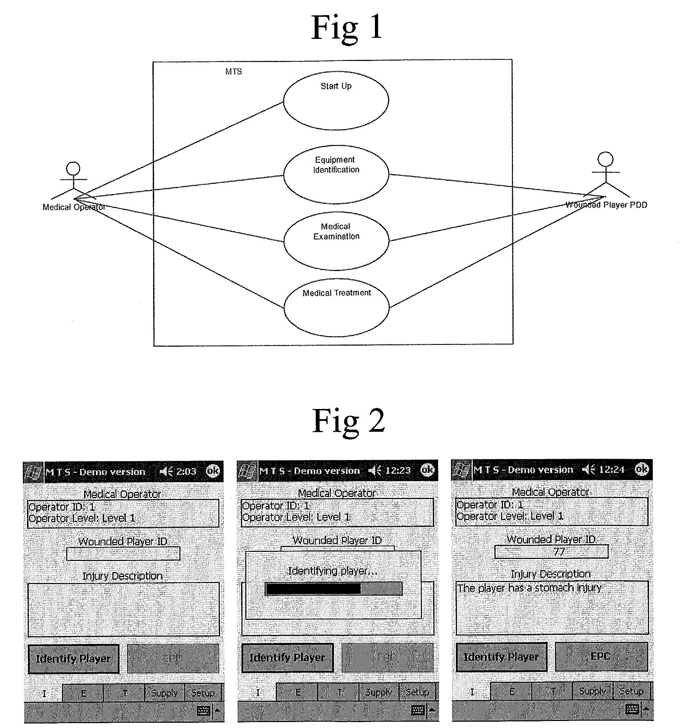

Figure 1 shows two actors, namely a Medical Operator and a Wounded player PDD. The Medical Operator interacts with a Medical Treatment System (MTS) via a Touch Pad by selecting commands and reading messages. The Wounded Player PDD is the actor who is under medical examination and treatment.

In the subsequent the commands used in the scenarios is given descriptive names in order to describe functionality and in order to show which main parameters affect the functionality. Thus, they may not be part of the real software. Please note that the complete error handling is not presented in the scenarios.

### Start-up

At start-up, previously used operator level and Medical Operator ID are used. Previously performed examination results are deleted.

### Equipment Identification

Equipment Identification is for example performed according to the following:
1. The Medical Operator directs an IR transceiver of the MTS towards the Wounded Player PDD and presses an IdentifyPlayer button, which causes the MTS to send a status requests to the PDD. At the same time, an Electronic Patient card will be fetched from the PDD.
2. The following information is provided regarding the status from the PDD.

**Table 1:**

| Status data obtained from the PDD | |
|---|---|
| **Data element** | **Usage** |
| Player ID | Presented in the identification view the screen, |
| DamageStatus | Used to evaluate whether the Player is wounded or not. • Player is **TREATABLE if:** o (b1 = 1) **or** (b2 = 1) **or** (b3 = 1) **and** o untreated⁽²⁾ WoundArea(s)exist **and** o b0=0 • Player is **NOT SUBJECT TO TREATMENT otherwise** |
| Time | The Time shall be used to synchronise the MTS. |
| PDD Medical Status | The PDD Medical Status shall be used to identify the Injury |
| PDD Medical Treatment | The PDD Medical Status shall be used to identify if any of the Injuries has been treated. |

3. If the Player is NOT SUBJECT TO TREATMENT the following shall be displayed in an Injury Description field:
a. "The player is Killed" if b0 = 1
b. "The player is not subject to medical care" otherwise

4. If the Player is TREATABLE
a. the InjuryDescription shall be based on the untreated WoundArea(s) and corresponding Ammunition Category(ies). The Ammunition Category for each WoundArea is looked up in a separate database using data regarding AmmunitionType from the PDD.
b. The combination of WoundArea and Ammunition Category is used to look up the InjuryID in a Medical handling Database. This combination may point at more than one InjuryID each with a specified probability to occur. If that is the case, the MTS will make a random selection among the possible Injuries based on these probabilities. The selected InjuryID is sent to the PDD.

Note that the AmmunitionType belongs to the most recent wound in each WoundArea and that a WoundArea is deemed to be treated if the applicable bit in TreatedArea is set.

### Electronic Patient Card (EPC)

The EPC consists of examinations and treatments performed since the last time the wounded player was hit. This information can be viewed after identification. A local image is kept and updated at examination in the MTS until a treatment is performed. After the treatment has been performed a new identification is required to be able to view the patient card. The reason for this is that the status may have been changed in the PDD.

Note that EPC shall be possible to view even if all WoundAreas have been treated and thus are judged to be NOT SUBJECT TO TREATMENT according to the above.

### Medical Examination

Medical examination can only be performed if the Wounded Player is identified. If Equipment Identification has not been performed, the Medical Examination View will not appear and an error message will be displayed saying that identification has to be done prior to examination.

The Medical Examination is performed according to the following:
1. When the Examination View has been entered, the Selectable Examinations for the current Operator Level will be presented to the Medical Operator. The list can be reduced by filtering out examinations related to a specific human body location and/or relation to ABCDE protocol.
2. When the examination is selected the corresponding examination duration will be fetched from the Medical Handling Database and the MTS will be locked until the examination duration has elapsed, after which the result will be presented to the operator.
3. An Examination Event will be created based on the result and stored in the MedicalHandlingEventLog. The EPC log is also updated. Thus it is possible to view the EPC log that was created at the last identification and updated with examinations performed by the current Medical Operator.

When the Examination View is left or the appropriate button is selected the examinations will be transferred to the PDD. The MTS will perform identification in order to make sure that the correct player is treated. If he directs the MTS towards wrong player an error message will be displayed.

Note that the selectable Examinations can be different for different injuries and for different operator levels.

In accordance with one example, the examination result is fetched from the medical Handling Database. In accordance with another example, the examination result is fetched from a Human Body Model. The main difference from using the Medical Handling Database is that the human Body model takes the time since the injury occurred into account when calculating the Examination Result.

### Medical Treatment

Medical treatment can only be performed if the Wounded Player is identified. If the Equipment Identification has not been performed, the Medical Treatment View will not appear and an error message will be displayed saying that identification has to be done prior to treatment.

The Medical Treatment is performed according to the following:
1. When the Treatment View has been entered, the Selectable Treatments for the current Operator Level will be presented to the Medical Operator. The list can be reduced by filtering out treatments depending on the relation to ABCDE protocol.
2. The Medical Operator selects one or more treatments to be performed and confirms the selection by pressing the Perform Treatment button.
3. When the Perform Treatment button is pressed the corresponding treatment durations will be fetched from the Medical Handling Database and the MTS will be locked until the accumulative treatment durations has elapsed.
4. The MTS will calculate the correction to the Life Time Counter Frequency based on the selected treatments, as discussed below.
5. The Medical operator will be requested to press a button to transfer the Treatment Result to the PDD. The MTS will perform identification in order to make sure that the correct player is treated.
6. A Command.dat will be sent containing PDD LifetimeCounter and one for each PDD Treatment record(s). If the new calculated Life Time Counter Frequency is zero the applicable TreatedArea bits will be set. If he directs the MTS towards wrong player an error message will be displayed.
7. A Treatment Event will be created for each selected treatment and stored in the MedicalHandlingEventLog.
8. The Medical Operator will now be forced to enter the Medical Supply View.
9. A list of supplies is fetched from Medical Supply Database, and presented to the operator.
10. The operator is instructed to select one or more supplies.
11. After a valid selection, i.e. non-empty supplies, the operator will be instructed to confirm the selection by pressing the save selection button
12. The available amount of used supplies shall be decreased.
13. A Supply Event will be created for each selected supply and stored in the MedicalHandlingEventLog. If no supply is selected when save selection button is pressed, a Supply event with SupplyID = 0 will be created.
14. Possible examination results (used for future presentation) related to the WoundedPlayer is deleted.
15. The MTS is now unlocked, i.e. the supplies view is left, and can be used for Medical Handling. Further Treatments or Examinations require that the operator identifies the player again.

The new Life Time Counter Frequency will be calculated for example based on the injury, treatments performed since the last hit and time since last hit.

### Man Machine Interface

The Man Machine Interface consists of the following views
- Identification View (Default)
- Examination View
- Treatment View
- Setup View
- Supply View

All texts displayed in the different views are fetched from a customer specific displayText module by referencing a unique displayText_ID. This makes the MTS independent to text contents and language. The following paragraphs present the different views and their contents.

### Identification View

When entering this view the Medical Operator shall direct the MTS IR towards the Wounded Player PDD and press the identification button. The Wounded Player ID is presented on the screen and possibly the injury selected by the MTS. See fig 2.

### Electronic Patient Card View

The view shown in 3 will appear when the EPC button is pressed in the identification view. Details for treatments and examinations will appear when the entries are selected.

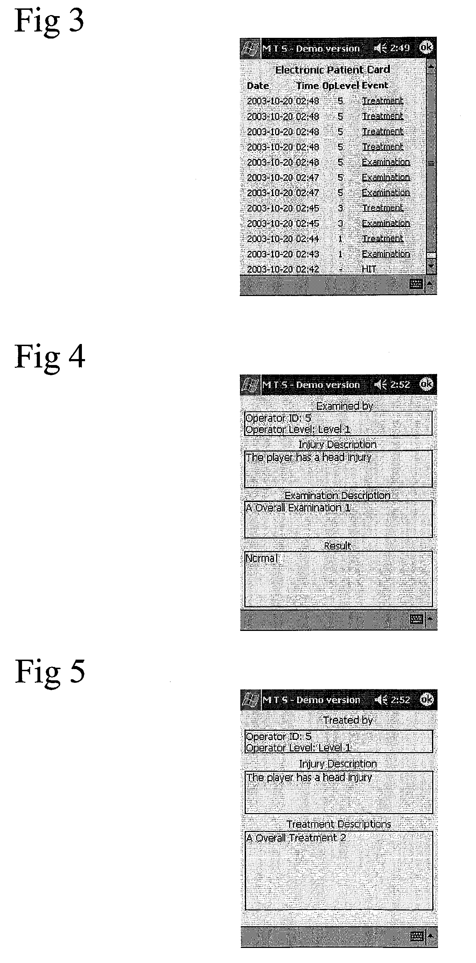

Fig 4 shows an examination-subview of the Electronic Patient Card of fig 3 and Fig 5 shows a treatment-subview of the Electronic Patient Card of fig 3.

### Examination View

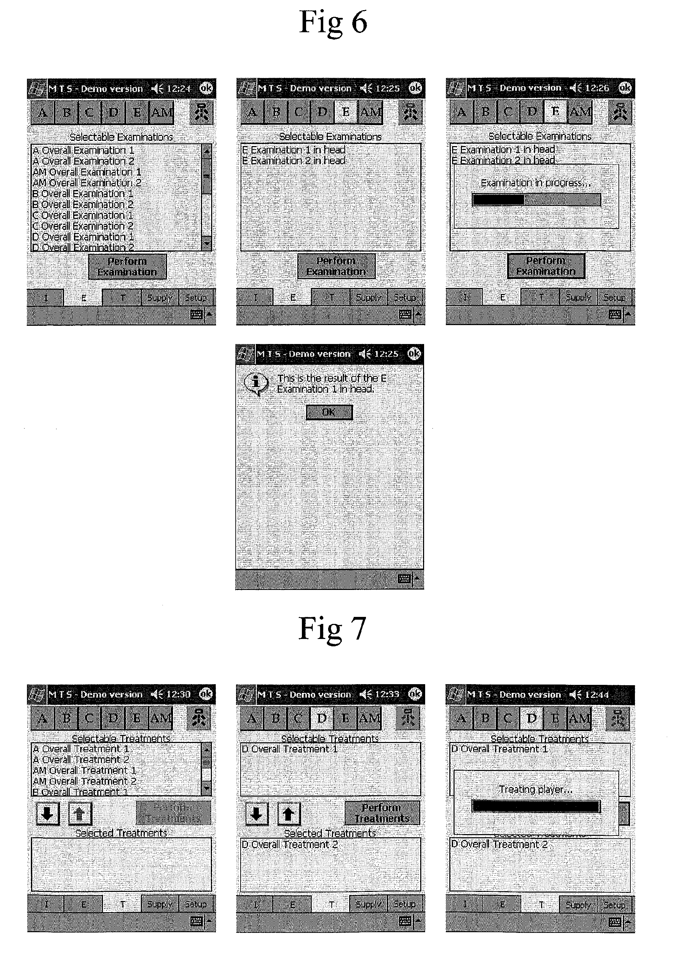

In fig 6, the different examination alternatives of the examination view will be presented to the Medical Operator. Upon selection of one of the examination alternatives, an examination result is calculated based on the chosen examination, wherein the examination result in one embodiment is dependent on the time passed since the injury. After the examination duration has elapsed, the examination result is presented to the Medical Operator. Only those examinations which the Medical Operator is authorized to perform are displayed.

In the examination view, buttons for filtering out examinations related to ABCDE protocol, are introduced. In addition by selecting one of the five locations on the body only related examinations will be viewed. The examinations will be related either to one of five locations (head, chest, stomach, arm and leg) or to the whole body. The relation between treatments and ABCDE protocol/body locations is set-up in the Medical Handling Database.

If no examination is related to the injury, the examination scroll list will be empty. Hence no examination will be possible to perform.

### Treatment View

In the treatment view of fig 7, all treatments steps, which the Medical Operator is authorized to perform are displayed. When the Medical Operator directs the MTS toward the Wounded Player PDD and presses the Transfer Treatment Result button, it will be shown that communication with the correct wounded player is established. The MTS then calculates the new status of the player under treatment based on the injury, treatments performed since the injury occurred and time since the injury occurred. The Medical Operator will be forced to wait until the treatment duration has elapsed before he can go on.

In the treatment view, buttons for filtering out treatments related to ABCDE protocol are introduced. The T button corresponds to transportation. Only those treatments related to the selected button will be presented. The relation between treatments and ABCDE protocol is set-up in the Medical Handling Database.

If he directs the MTS towards wrong player an error message will be displayed. The selected treatments will remain in the list until
- The button to perform selected treatments are pressed
- An identification is performed
- New examinations are selected in the Examination view
- Something is selected in the Supply View
- Any action is taken in the Set-Up View

If no treatment is related to the injury, the treatment scroll list will be empty. Hence no treatment will be possible to perform."

### Body Location Selection View

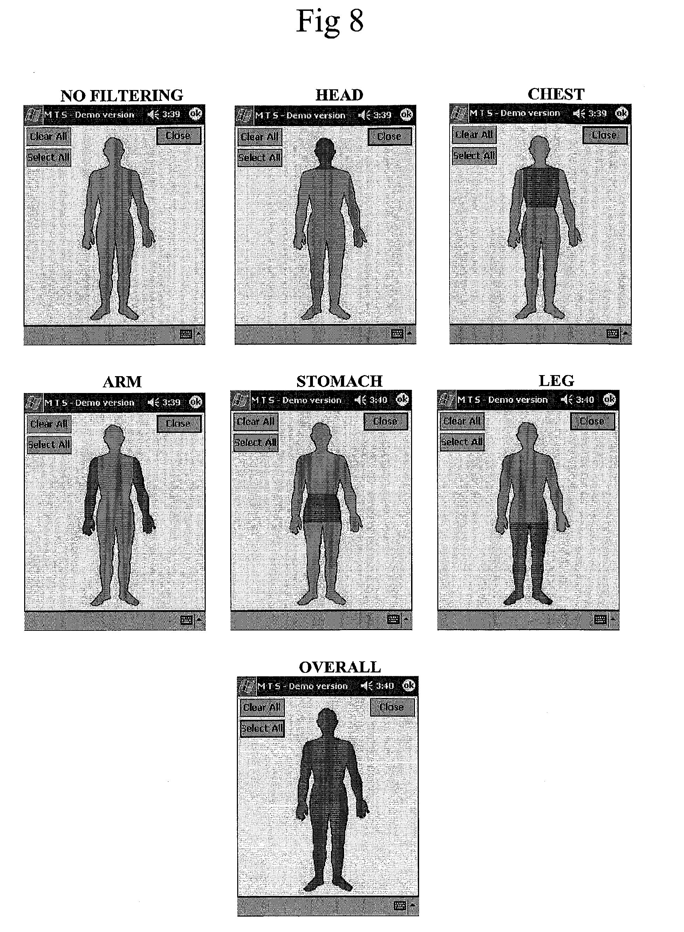

The body location selection view of fig 8 is used to select whether examinations/treatments related to a certain body location shall be presented in the list of selectable items or if all shall be presented.

### Set-Up View

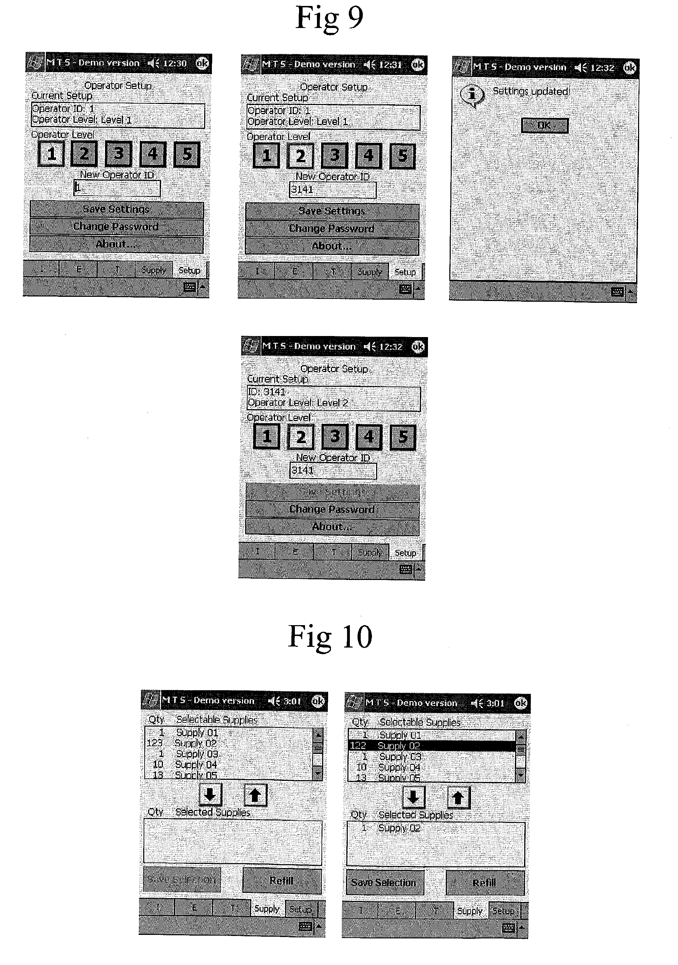

It is only possible to enter the set-up view of fig 9 if the Medical Operator is in possession of the correct access credentials.

The following data may be to set
- Medical Operator Player Id
- Operator Level (1-5 where level 1 is the level with lowest authority)

The versions of the following items can be checked in the set-up view.:
- Medical Handling Database
- Medical Supply Database
- Medical Treatment Simulator

After the operator level has been switched selectable examinations and selectable treatments shall be immediately adapted to the new operator level.

### Supply View

In the supply view of fig 10, the available supplies shall be selected in a similar way as the selection of treatments. The available amount is decreased each time a selection is made. When it becomes zero it shall be marked as empty and not being selectable any more.

The Supply View shall contain a refill button. The access to this shall be protected by the same password as the Set up view. When the button is pressed the following shall happen:
1. All items shall be filled up to maximum level.
2. All non-zero items shall be selectable again.
3. A refill event shall be created for each refilled item.

### Rules for finding matching Injury

A) The database shall always contain a WoundAreaID = 0 which applies when the applicable combination of WoundAreaID and Ammunition Category is not found in the database.
B) When searching for a matching injury in the database the priority is according to the following:
   **Prio 1)** The Injury in the database which match both WoundAreaID and (all) Ammunition Category (ies).
   **Prio 2)** The Injury in the database without specified Ammunition Category, which match the WoundAreaID.
   **Prio 3)** Select the single wound with lowest WoundAreaID, i.e. select the bit in the bit field which is least significant which has the value 1. (b0=least significant)
      Example
      WoundAreaID in Status file has value = 3, i.e. wounded in Head and Chest. If this combination does not exist in database the wound will be handled as a Head injury.

If this wound is not specified the following error message shall be presented on the screen.
*"Wound Area missing in Database ".*

In this case, a command setInjury will not be sent to the PDD.

### Medical Handling Event Log

Every time an examination or a treatment is performed, an event is stored in the Medical Handling Event Log.

The event records are stored in a file which can keep up to 2000 entries. In case the event record becomes full they will be thrown away according to a FIFO principle.

## Claims

1. Medical treatment simulator comprising
- means for retrieving data from a soldier equipment regarding a simulated wound status of the soldier, said data including information regarding a wound area of the soldier body,
- a database arranged to store a set of wound types related to each possible wound area and
- processing means for selecting a wound type from the wound area information retrieved from the soldier equipment and from the set of wound types related to said wound area.

2. Medical treatment simulator according to claim 1, wherein a probability of occurrence is related to each wound type data of the database and wherein the processing means are arranged to randomly select wound type based on said probabilities.

3. Medical treatment simulator according to claim 1, wherein said means for retrieving soldier equipment data includes an IR link.

4. Medical treatment simulator according to claim 1, wherein said database further comprises one or more examinations related to each wound type.

5. Medical treatment simulator according to claim 4, wherein the database comprises a number of selectable treatments.

6. Medical treatment simulator according to claim 5, comprising means for sending information to the soldier equipment regarding updated wound status based on a result of a selected treatment.
